Europäisches Patentamt

European Patent Office

Office européen des brevets

(11) Numéro de publication : **0 337 544 B1**

## (12) FASCICULE DE BREVET EUROPEEN

(45) Date de publication du fascicule du brevet :
05.07.95 Bulletin 95/27

(51) Int. Cl.⁶ : **G06F 12/02**

(21) Numéro de dépôt : **89200858.2**

(22) Date de dépôt : **06.04.89**

(54) **Procédé et unité de gestion de mots d'adresse.**

(30) Priorité : **12.04.88 FR 8804809**

(43) Date de publication de la demande :
**18.10.89 Bulletin 89/42**

(45) Mention de la délivrance du brevet :
**05.07.95 Bulletin 95/27**

(84) Etats contractants désignés :
**DE FR GB**

(56) Documents cités :
**SYSTEMS.COMPUTERS.CONTROLS, vol. 1,
no. 6, novembre/decembre 1970, pages 26-33;
N. TOKURA: "A multi-dimensional addressing
system"**

(73) Titulaire : **LABORATOIRES D'ELECTRONIQUE
PHILIPS
3, Avenue Descartes
F-94450 Limeil-Brévannes (FR)**
(84) **FR**
Titulaire : **Philips Electronics N.V.
Groenewoudseweg 1
NL-5621 BA Eindhoven (NL)**
(84) **DE GB**

(72) Inventeur : **Jousselin, Christian Société Civile
S.P.I.D.
209, rue de l'Université
F-75007 Paris (FR)**
Inventeur : **Moskowitz, Jean-Paul Société
Civile S.P.I.D.
209, rue de l'Université
F-75007 Paris (FR)**

(74) Mandataire : **Landousy, Christian et al
Société Civile S.P.I.D.
156, Boulevard Haussmann
F-75008 Paris (FR)**

EP 0 337 544 B1

## Description

L'invention concerne un procédé de gestion de mots d'adresses qui détermine dans une unité de gestion des adresses de destination à partir de mots d'adresse d'entrée de (M+N) bits pour l'aiguillage de données vers une structure adressable.

Elle concerne également une unité de gestion de mots d'adresse mettant en oeuvre ce procédé.

Elle concerne également les calculateurs, microprocesseurs, dispositifs de gestion de données, dispositifs de stockage ou autres dans lesquels un tel procédé ou une telle unité de gestion peuvent opérer, c'est-à-dire lorsqu'il est nécessaire à partir de mots d'adresse de déterminer des adresses de destination auxquelles doivent être stockées des données concernées par l'opération. Par donnée il faut entendre ici tout mot destiné à être stocké sans se limiter au sens étroit courant du mot donnée mais en englobant les mots d'instruction.

En effet dans les langages de programmation par type abstrait, c'est-à-dire la forme la plus moderne de la programmation structurée, ou des langages dits d'intelligence artificielle, les formes de conception de logiciels sont : structure de données, structure de programmes, programmation par les données. Dans les langages d'intelligence artificielle il n'existe plus aucune différence de forme entre donnée et programme. Cette tendance générale à la structuration est due à un besoin de méthode de conception et d'augmentation de la lisibilité des logiciels pour en faciliter leur maintenance. Cela se traduit par une augmentation du temps d'accès aux informations stockées en mémoire.

D'une manière générale la détermination de l'adresse de destination d'une donnée va s'effectuer à partir d'une adresse de départ (premier mot binaire) à laquelle on ajoute une valeur de saut (second mot binaire) afin d'en déduire l'adresse de destination pour le stockage en mémoire. De la même manière que cela a été indiqué pour le mot "donnée", de même que le mot "mémoire" va concerner en premier lieu la notion habituelle de mémoire mais également toute structure organisée dans laquelle ses constituants vont pouvoir être adressés.

Une mémoire est un ensemble fini d'éléments mémoire. Sa structure est une structure de groupe, au sens mathématique de la théorie des groupes, qui est imposée par une loi de translation des adresses. Les modes d'addressage habituels servant au déplacement dans la mémoire utilisent cette loi. La mémoire ne contient pas en elle sa structure, l'adresse associée à chaque élément mémoire n'est qu'un identificateur : il n'existe aucun lien à priori entre les adresses notées 00, 01 ou 10. La loi de translation d'adresses, mise en oeuvre généralement dans une unité arithmétique et logique, n'est autre que la loi d'addition des entiers, ce qui confère à la mémoire une structure de groupe cyclique donc commutatif dont le graphe associé est un cercle. La configuration de la mémoire centrale détermine les structures des données, et avec la configuration en cercle de la mémoire actuelle, ces structures sont des tableaux à une dimension.

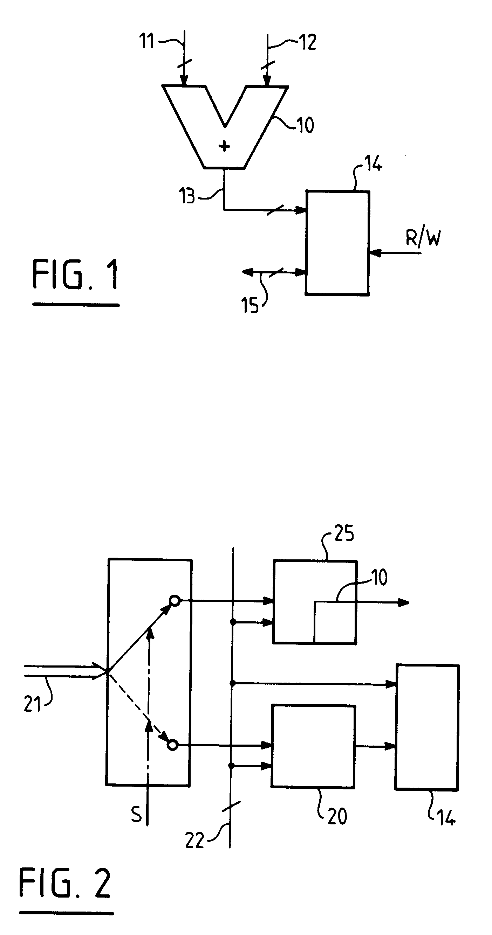

Cette organisation de l'adressage a été déterminée par J. Von NEUMANN dès le début de l'apparition des calculateurs à programme enregistré. Une représentation très schématisée d'une telle organisation est par exemple fournie à la figure 2 de l'article intitulé "Les hyper-ordinateurs" de P. QUINTON dans LA RECHERCHE volume 16 n° 167, juin 1985. Une unité de traitement et une unité de contrôle échangent avec une mémoire des adresses et des données. Les adresses sont des numéros d'ordre qui permettent de stocker ou d'aller chercher en mémoire les données. Les instructions fournies par l'unité de contrôle sont décodées puis exécutées. Selon une telle organisation l'instruction suivante est implicitement celle qui suit la précédente en mémoire.

On connaît également le document "a multi-dimensionnal adressing system" N. TOKURA, Systems Computers Controls vol 1, n° 6, nov./déc. 1970, pages 26-33 qui concerne un système d'adressage multidimensionnel qui partitionne un champ d'adresse en plusieurs champs pour adapter le calcul des adresses à la structure multidimensionnelle des données. Ce document précise qu'une adresse nouvelle est déterminée en mettant en oeuvre la loi arithmétique d'addition. Les adresses ainsi déterminées appartiennent de ce fait à un groupe commutatif.

Mais les mécanismes d'adressage mis en cause selon de telles conceptions deviennent de très gros consommateurs de temps pour les langages évolués actuels. Le problème posé est donc de réduire les durées d'adressage mises en oeuvre. Aussi selon l'invention une nouvelle conception de l'adressage a été développée qui permet globalement d'abaisser la durée nécessaire à la détermination des adresses de destination.

Cette approche est un changement de la structure de groupes des adresses conventionnelles en une structure de groupes non commutatifs selon la présente invention. De tels groupes non commutatifs sont bien connus. Une présentation très classique est donnée par : H.S.M. Coxeter et al, Générateurs et relations for discrete group, Springer, Berlin and others 1957, pages 1 à 32. Cependant, le dernier type de groupes n'a jamais été utilisé pour adresser des structures régulières en traitement de données.

La solution au problème posé consiste selon une première variante en un procédé de gestion de mots d'adresses qui détermine dans une unité de gestion des adresses de destination à partir de mots d'adresse

2

d'entrée de (M+N) bits pour l'aiguillage de données vers une structure adressable, ledit procédé, mis en oeuvre dans l'unité de gestion, comprend les étapes suivantes :

- à partir de deux mots d'adresse d'entrée, séparation de chacun de ces mots en deux champs tel que :
  . les M bits de poids fort et les N bits de poids faible du premier mot d'entrée constituent respectivement les champs I et J,
  . les M bits de poids fort et les N bits de poids faible du second mot d'entrée constituent respectivement les champs K et L,

ledit procédé est caractérisé en ce qu'il combine les champs dans l'unité de gestion selon une loi de composition des groupes non-commutatifs métacycliques pour déterminer des adresses de destination formées de deux champs F et G constitués respectivement des M bits de poids fort et des N bits de poids faible issus de la combinaison tel que :

$F = I + K$ modulo $2^M$ et

$G = L+J*b^K + [$dépassement de $(I+K)]*2^P$ modulo $2^N$

où $b$ et P sont des constantes prédéterminées du groupe choisi tel que $b^{2^M}-1$ est un multiple de $2^N$ et $b-1$ est un multiple de $2^{N-P}$, et P est un entier positif inférieur à N et où les symboles (+) et (*) représentent respectivement les opérations d'addition et de multiplication.

Selon une seconde variante mettant en oeuvre un second groupe non-commutatif, l'invention concerne un procédé caractérisé en ce qu'il combine les champs dans l'unité de gestion selon une loi de composition des groupes non-commutatifs métacycliques pour déterminer des adresses de destination formées de deux champs F et G constitués respectivement des M bits de poids fort et des N bits de poids faible issus de la combinaison, les champs I, J, K, L étant formés respectivement des bits $(I_M...I_1)$, $(J_N...J_1)$, $(K_M...K_1)$, $(L_N...L_1)$, où l'indice d'ordre 1 se rapporte au bit de poids le plus faible de chaque champ, ledit procédé combinant ces champs dans l'unité de gestion selon une loi de composition de groupes non-commutatifs et détermine F et G tel que :

$F = I+K+J_1.K_1.C*2^{M-1}$ modulo $2^M$

et

$G = L+J*b^K+J_1.K_1*(y-b)+J_1.K_2.d*2^{N-1}$
$+ [$dépassement de $(I+K+J_1.K_1.C*2^{M-1})]*2^P$ modulo $2^N$

où les symboles (+), (*) et (.) représentent respectivement l'addition, la multiplication et la fonction ET logique et où C, y, P, b, d sont des constantes prédéterminées du groupe choisi selon :

  . $b^{2^M}-1$ doit être un multiple de $2^{N-1}$
  . $b-1$ doit être un multiple de $2^{N-P}$
  . C vaut 0 ou 1
  . $b^{C*2^{M-1}}-1$ doit être un multiple de $2^{N-1}$
  . d vaut 0 ou 1
  . $(y-b)*(b+1)-d*2^{N-1}$ doit être un multiple de $2^P$
  . (si $C*2^{M-2}$ est pair) tester $b^{C2^{M-1}}-2*(b-y)-1$ qui doit être un multiple de $2^P$
  . (si $C*2^{M-2}$ est impair) tester
    $b^{C*2^{M-1}}-2*(b-y)+d*2^{N-1}-1$ qui doit être un multiple de $2^P$.

Ainsi avantageusement, l'invention s'écarte fondamentalement des documents cités qui utilisent des opérations mettant en oeuvre des groupes commutatifs, l'invention calculant des adresses selon des lois de composition des groupes non-commutatifs. Pour cela le procédé considère un mot d'adresse de départ et un mot d'adresse de saut. Sur ces deux "mots d'adresse" le procédé applique une loi de composition de groupes non-commutatifs. Une loi à deux générateurs s et t (au sens de la théorie des groupes) conduit à décomposer chaque mot d'adresse en deux champs d'adresse (c'est-à-dire 4 champs) et à appliquer à chaque champ d'adresse ladite loi non commutative.

Ce procédé peut être mis en oeuvre selon la première variante de l'invention dans une unité de gestion de mots d'adresse d'entrée de (M+N) bits qui détermine des adresses de destination pour l'aiguillage de données, l'unité déterminant les adresses de destination à partir de deux mots d'adresse d'entrée en les séparant l'un et l'autre, de la même manière, selon deux champs,

  . les M bits de poids fort et les N bits de poids faible du premier mot d'entrée constituant respectivement les champs I et J,
  . les M bits de poids fort et des N bits de poids faible du second mot d'entrée constituant respectivement les champs K et L,

caractérisé en ce que l'unité de gestion combine les champs selon une loi de composition des groupes non-commutatifs métacycliques pour déterminer des adresses de destination formées de deux champs F et G constitués respectivement des M bits de poids fort et des N bits de poids faible issus de la combinaison, l'unité de gestion comprenant :

- un premier additionneur qui délivre le champ F tel que F = I+K modulo $2^M$,
- un décaleur qui décale de P poids binaires le bit de dépassement délivré par le premier additionneur et qui délivre sur N bits un mot de dépassement décalé R,
- un second additionneur qui additionne L et le mot de dépassement décalé R,
- un élément de calcul qui détermine l'expression $J*b^k$,
- un troisième additionneur qui additionne le résultat délivré par l'élément de calcul avec le résultat délivré par le deuxième additionneur et qui délivre le champ G tel que

G = L+J*b^k+R modulo $2^N$

où b et P sont des constantes prédéterminées du groupe choisi tel que $b^{2^M}-1$ est un multiple de $2^N$ et b-1 est un multiple de $2^{N-P}$, et P est un entier positif inférieur à N.

Il peut aussi être mis en oeuvre selon la deuxième variante dans l'unité de gestion précédente modifiée de sorte que le premier additionneur opère sur (M+1) bits et délivre 2 bits de dépassement qui sont introduits et décalés dans le décaleur et en ce qu'elle comprend en outre un circuit de conditionnement des mots d'adresse d'entrée, les champs I, J, K, L étant formés respectivement des bits $(I_M...I_1)$, $(J_N...J_1)$, $(K_M...K_1)$, $(L_N...L_1)$, où l'indice d'ordre 1 se rapporte au bit de poids le plus faible de chaque champ, le circuit de conditionnement comprenant :

- sur une première voie :
  - . une première porte ET qui reçoit $J_1$, $K_1$ et un bit C
  - . une seconde porte ET qui reçoit $I_M$ et la sortie de la première porte ET
  - . un premier sélecteur, actionné par la sortie de la première porte ET, qui sélectionne $I_M$ ou sa valeur logique inversée de sorte que le premier additionneur reçoit sur une entrée :
    - les M-1 bits de poids faible du champ I du mot d'adresse d'entrée,
    - la sortie du premier sélecteur comme $M^{ième}$ bit,
    - la sortie de la seconde porte ET comme $(M+1)^{ième}$ bit,
  - . et sur l'autre entrée, le champ K positionné sur les M bits les moins significatifs de cette entrée, le $(M+1)^{ième}$ bit étant à zéro,
- sur une seconde voie :
  - . une troisième porte logique ET qui reçoit $J_1$ et $K_1$ et qui agit sur un deuxième sélecteur qui sélectionne une valeur y-b ou une valeur nulle,
  - . une quatrième porte logique ET, qui reçoit $J_1$, $K_2$ et un bit d, et qui agit sur un troisième sélecteur qui sélectionne $L_N$ ou sa valeur logique inversée,
  - . un quatrième additionneur qui reçoit sur une entrée la sortie du deuxième sélecteur et sur l'autre entrée les (N-1) bits de poids faible du champ L du mot d'adresse d'entrée ainsi que la sortie du troisième sélecteur comme $N^{ième}$ bit, la sortie du quatrième additionneur entrant dans le second additionneur, où C, y, P, b, d sont des constantes prédéterminées du groupe choisi.

Lorsqu'un concepteur de logiciels utilise par exemple une structure d'arbre binaire pour décrire la gestion des adresses il peut être intéressé à parcourir ces arbres à l'aide de sélecteurs droit et gauche. Or, ces sélecteurs ne commutent pas entre eux : l'adressage droit puis gauche n'est pas équivalent à l'adressage gauche puis droit. Pour réaliser un tel mécanisme d'accès non commutatif, il faut au minimum utiliser une structure de groupe à deux générateurs, appelés d'une manière générale s et t, correspondant par exemple aux deux types de déplacement droit et gauche. Un élément mémoire d'adresse a=i,j se notera : $s^i t^j$ où s et t sont deux parties du champ d'adresse.

L'invention concerne préférentiellement un groupe métacyclique à deux générateurs qui peut être défini par les relations suivantes :

$$\{s, t \mid t^{2^N} = e \ ; \ s^{2^M} = t^{2^P} \ ; \ ts = st^b\} \quad (3)$$

où le nombre d'éléments mémoire est $2^N*2^M$ et où P et b sont des constantes caractéristiques du groupe choisi tel que $b^{2^M}-1$ est un multiple de $2^N$ et b-1 est un multiple de $2^{N-P}$, et P est positif et inférieur à N. Les relations de la forme $s^i = t^j$ s'interprètent de la façon suivante :

- si j=0 la propagation du dépassement à la suite d'une opération au niveau i du champ s ne doit pas être prise en compte,
- sinon la propagation du dépassement à la suite d'une opération au niveau i du champ s doit se faire au niveau j du champ t.

La loi de composition du groupe métacyclique est:

$(s^i t^j)\$(s^k t^l) =$

$s^{i+k} t^{l+j*b^k+ [dépassement de i+k]*2^P}$

où le symbole ($) représente la loi du groupe. Les opérations sur les champs de bits à effectuer par l'unité de gestion sont:

pour le champ s : i+k

pour le champ t : I+j∗b$^k$+[dépassement de (i+k)]∗2$^P$.

Pour simplifier l'écriture, lorsque l'unité de gestion reçoit deux mots d'adresse respectivement formés en deux champs (I, J) et (K, L), les mêmes lettres vont représenter les valeurs numériques qui sont associées à ces champs.

Ainsi la mise en application des relations (3) dans l'unité de gestion va consister à déterminer les champs F et G de l'adresse de destination selon les relations (1).

L'invention concerne également le second groupe non-commutatif à deux champs défini par les relations suivantes :

$$\{s,t \mid t2^N=e \; ; \; s2^M=t2^P \; ; \; ts2=s2tb^2+d\ast2^{N-1}; \; t2s=st2b \; ; \; ts=s^{1+C\ast2^{M-1}}ty\} \qquad (4)$$

où P,C,d,b,y, sont des constantes caractérisant la loi du groupe.

Ainsi la mise en application de la formule (4) dans l'unité de gestion va consister à déterminer les champs F et G de l'adresse de destination selon les équations (2).

On obtient ainsi les adresses de destination qui ne sont plus issues de la loi d'addition des entiers mais d'une loi des groupes non commutatifs ce qui permet de stocker et d'accéder aux données avec des durées réduites.

L'invention sera mieux comprise à l'aide des figures suivantes, données à titre d'exemples non limitatifs et qui représentent :

figure 1 : un schéma indiquant le mode habituel d'adressage.

figure 2 : un schéma montrant l'insertion de l'unité de gestion dans une structure pré-existante.

figures 3A et 3B : deux organigrammes du procédé de gestion respectivement dans le cas du groupe métacyclique et du second groupe non-commutatif.

figures 4A et 4B : deux schémas de l'unité de gestion pour la mise en oeuvre du procédé respectivement selon le groupe métacyclique et selon le second groupe non-commutatif.

figures 5A et 5B : un exemple représentant un problème de rotation-symétrie.

figure 6 : un deuxième exemple représentant un problème de graphe quelconque.

figure 7 : une modification du schéma des figures 4A et 4B concernant la détermination de J∗b$^K$ dans le cas où b=-1 modulo 2$^N$ par exemple pour une application à un problème de rotation- symétrie.

La figure 1 représente un schéma du mode habituel d'adressage. La détermination de l'adresse de destination se fait à l'aide d'un additionneur 10 qui reçoit, sur les bus 11 et 12, généralement une adresse de départ à laquelle il ajoute une valeur de saut. Il délivre une adresse de destination sur le bus de sortie 13 qui adresse une mémoire 14. Celle-ci à l'aide d'un signal de lecture/écriture R/W fournit ou reçoit des données sur un bus 15. La loi mise en oeuvre est ici la loi d'addition classique des entiers qui permet d'adresser la donnée dans la mémoire. L'additionneur 10 est généralement une partie fonctionnelle d'une unité arithmétique et logique (UAL).

La figure 2 représente un schéma montrant l'insertion de l'unité de gestion selon l'invention dans une structure pré-existante telle que celle de la figure 1. Comme son nom l'indique l'UAL 25, qui renferme l'additionneur 10, effectue des opérations soit arithmétiques soit logiques et ceci sur des données ou sur des adresses.

Selon l'invention l'unité de gestion 20 va prendre en charge les commandes des opérations arithmétiques sur les adressses qui ne seront donc plus effectuées par l'UAL. Ces opérations sont détectées dans la structure globale à l'aide d'un signal de contrôle S qui aiguille vers l'unité de gestion 20 lesdites opérations et aiguille vers l'UAL 25 toutes les autres opérations dont la totalité apparaît sur le bus 21. Ainsi l'unité de gestion 20 opère directement sur les adresses présentes sur le bus général 22 et agit sur la mémoire 14.

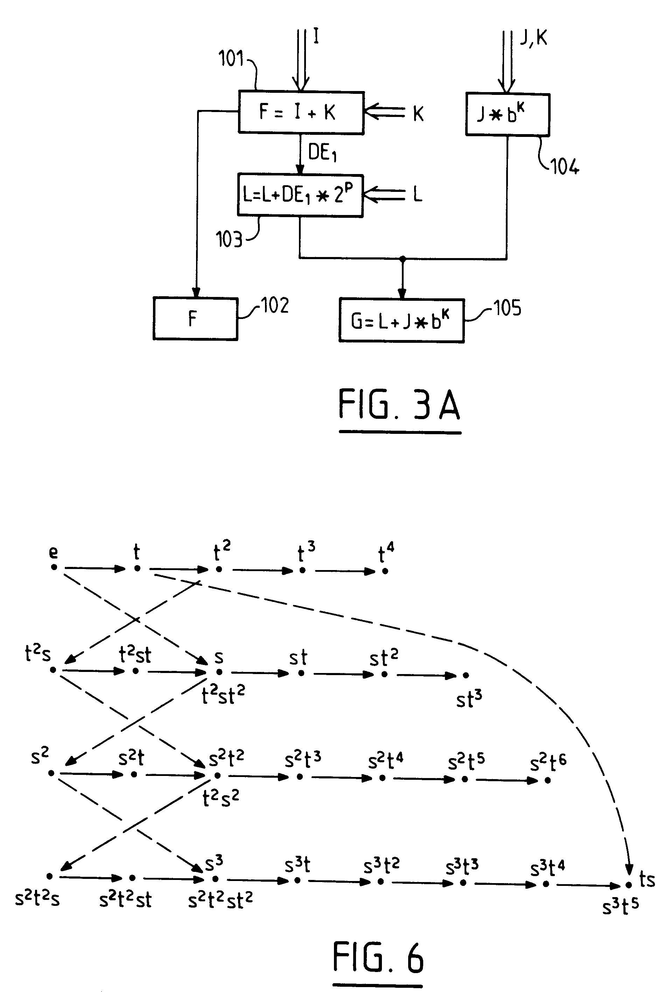

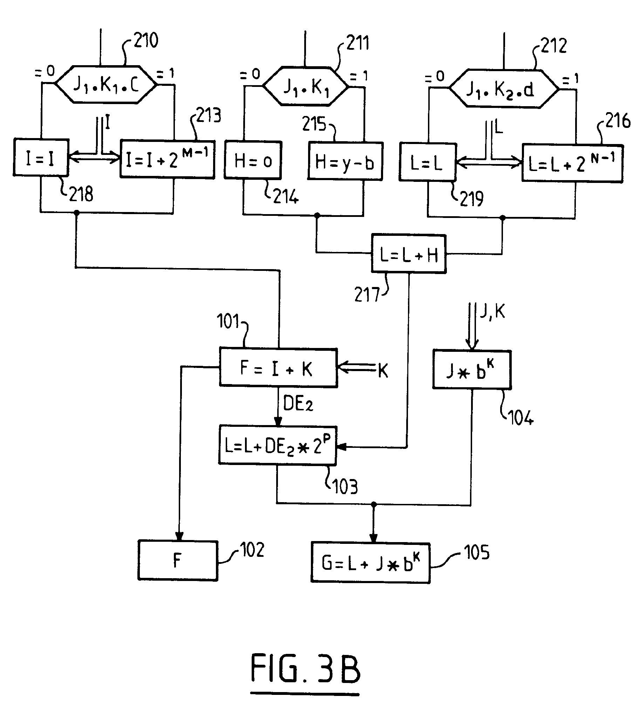

Selon l'invention les deux mots d'adresse d'entrée sont séparés l'un et l'autre en deux champs sur lesquels l'unité de gestion applique une loi de composition des groupes non commutatifs. Un tel groupe est préférentiellement le groupe métacyclique de la formule 3. Les figures 3A et 3B représentent deux organigrammes du procédé de gestion opérant sur ces groupes non-commutatifs.

Les deux mots d'entrée sont séparés chacun en deux champs tel que :

- le premier mot est séparé en un champ I de M bits, et en un champ J de N bits,
- le deuxième mot est séparé en un champ K de M bits, et en un champ L de N bits.

La figure 3A concerne le groupe métacyclique. Dans une étape 101 les champs I et K sont additionnés pour fournir le champ F qui est délivré (étape 102). Lors de l'étape 101 l'addition qui est effectuée sur deux champs de M bits peut engendrer un bit de dépassement DE1 apparaissant sur le $(M+1)^{\text{ième}}$ bit. Il est utilisé lors de l'étape 103 :

- lorsque ce bit est à zéro la valeur du champ d'entrée L n'est pas altérée,
- lorsque ce bit est à un, la valeur du champ d'entrée L est additionnée à un mot de dépassement de valeur $2^P$. La génération de ce mot consiste simplement à placer le bit de dépassement sur le $(P+1)^{\text{ième}}$ bit d'un mot de N bits, tous les autres bits du mot étant à zéro. Ce mot de dépassement est ajouté à la valeur de L. La valeur de P est une constante caractéristique du groupe non-commutatif choisi.

L'étape 104 consiste à combiner les champs J et K selon l'expression $J*b^K$. Le champ G est alors déterminé (étape 105) en additionnant $J*b^K$ au résultat obtenu après l'étape 103 selon $G = L+J*b^K$. Le champ F constitue les M bits les plus significatifs et le champ G constitue les N bits les moins significatifs du résultat final.

La figure 3B concerne le second groupe non-commutatif. On retrouve les mêmes étapes 101 à 105 précédentes mais avec certaines modifications.

. la valeur I pour l'étape 101 et la valeur L pour l'étape 103 ont toutes deux subi un conditionnement,
. l'étape 101 porte sur une addition effectuée sur (M+1) bits,
. l'étape 103 porte sur une addition effectuée avec un mot de dépassement obtenu à partir des deux bits de dépassement DE2, soit le $(M+1)^{\text{ième}}$ et le $(M+2)^{\text{ième}}$ bit, délivrés à l'étape 101.

Les champs d'entrée I, J, K, L sont formés respectivement des bits $(I_M...I_1)$, $(J_N...J_1)$, $(K_M...K_1)$, $(L_N...L_1)$, où l'indice d'ordre 1 se rapporte au bit de poids le plus faible de chaque champ.

Pour le second groupe non-commutatif le procédé comprend en outre les étapes de conditionnement suivantes :

- l'étape 210 opère le ET logique entre les bits $J_1$, $K_1$ et un bit C qui est une constante prédéterminée du groupe :
  . lorsque le résultat de cette étape est à 0 la valeur du champ d'entrée I n'est pas modifiée (I=I) (étape 218),
  . lorsque le résultat de cette étape est à 1 la valeur du champ d'entrée I est remplacée par une nouvelle valeur tel que I (nouvelle) = I (ancienne)$+2^{M-1}$ (étape 213). C'est cette nouvelle valeur sur (M+1) bits qui est utilisée pour l'étape 101 ;
- l'étape 211 opère le ET logique entre $J_1$ et $K_1$ :
  . lorsque le résultat est à zéro une valeur temporaire H est mise à zéro (étape 214),
  . lorsque le résultat est à un, la valeur temporaire H est chargée avec y-b (étape 215). y et b sont des constantes prédéterminées du groupe ;
- l'étape 212 opère le ET logique entre $J_1$, $K_2$ et un bit d qui est une constante prédéterminée du groupe :
  . lorsque le résultat est à zéro, la valeur L du champ d'entrée n'est pas modifiée (L=L) (étape 219),
  . lorsque le résultat est à 1, la valeur de L du champ d'entrée est remplacée par une nouvelle valeur L tel que L (nouvelle) = L (ancienne)$+2^{N-1}$ (étape 216) ;
- l'étape 217 opère l'addition de la nouvelle valeur L avec H qui se substitue à L tel que L (nouvelle) = L (ancienne)+H. C'est cette dernière valeur de L qui est utilisée pour l'étape 103.

La suite des étapes se déroule comme dans le cas décrit pour l'organigramme de la figure 3A.

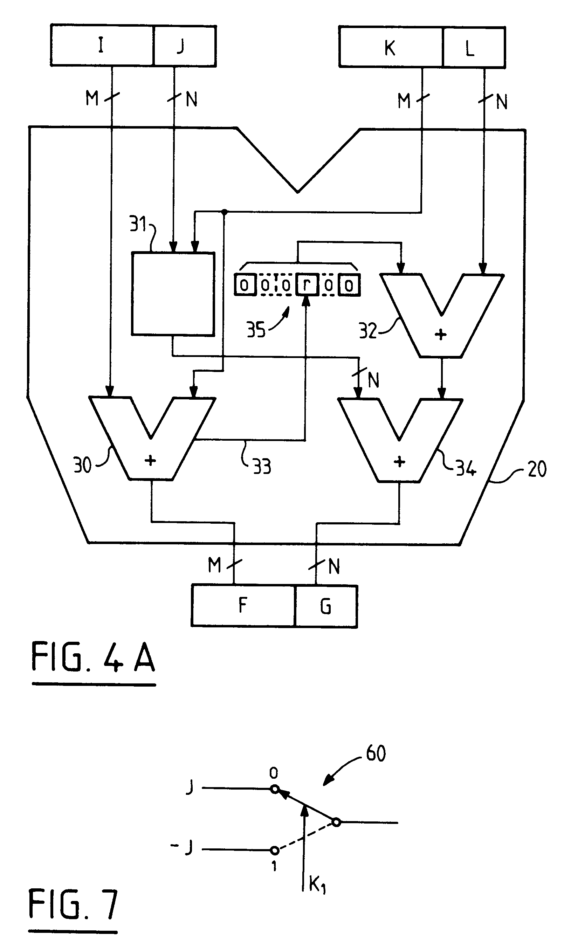

La figure 4A représente un schéma de l'unité de gestion selon l'invention pour la mise en oeuvre du procédé selon le groupe métacyclique.

L'unité de gestion comprend un premier additionneur 30 qui additionne I et K et délivre le champ F sur M bits. Un élément de calcul 31, qui reçoit J et K, détermine l'expression $J*b^K$. Cet élément de calcul est, par exemple, une table qui stocke des valeurs prédéterminées. Cette table est par exemple un réseau à logique programmée PLA. Le dépassement de l'additionneur 30, qui apparaît sur la connexion 33, est introduit dans un décaleur 35 et fournit un mot de dépassement. Ceci revient à placer le bit de dépassement dans la $(P+1)^{\text{ième}}$ position du mot c'est-à-dire à multiplier le bit de dépassement par $2^P$. Ce mot de dépassement est additionné à L dans un deuxième additionneur 32. Sa sortie est additionnée avec la sortie de l'élément 31 dans un troisième additionneur 34 qui délivre sur N bits le champ G du résultat final.

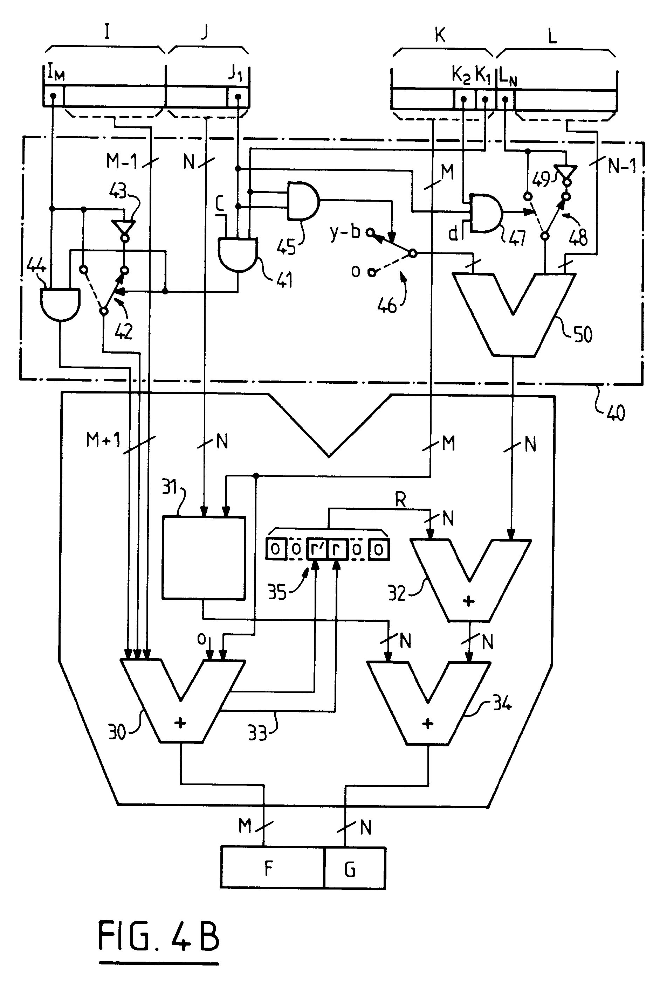

La figure 4B représente un schéma de l'unité de gestion pour la mise en oeuvre du procédé selon l'invention selon le second groupe non-commutatif. Il comprend les mêmes éléments que ceux de la figure 4A avec les modifications suivantes :

. le premier additionneur 30 opère sur (M+1) bits mais le champ d'entrée I est modifié par un circuit de conditionnement 40,
. le premier additionneur 30 délivre deux bits de dépassement $DE_2$ qui sont introduits dans le décaleur 35,
. le deuxième additionneur 32 opère avec un champ L modifié par le circuit de conditionnement 40.

Le circuit de conditionnement 40 comprend sur une première voie qui modifie le champ d'entrée I :

. Une première porte ET 41 qui reçoit $J_1$ et $K_1$ et un bit C. Les bits $J_1$ et $K_1$ sont les bits les moins significatifs respectivement des champs J et K et le bit C est une caractéristique du groupe choisi ;

. La sortie de la porte ET 41 actionne un premier sélecteur 42 qui sélectionne soit le bit $I_M$ le plus significatif du champ I soit son inverse délivré, par exemple, par un inverseur 43 ;

. La sortie de la porte ET 41 entre également dans une deuxième porte ET 44 qui reçoit aussi $I_M$.

Le champ I modifié qui entre dans l'additionneur 30 est ainsi constitué :

. des (M-1) bits de poids faible du champ I du mot d'entrée,

. de la sortie du sélecteur 42 comme $M^{\text{ième}}$ bit,

. de la sortie de la seconde porte ET 44 comme $(M+1)^{\text{ième}}$ bit.

L'additionneur 30 reçoit sur sa seconde entrée, le champ K positionné sur les M entrées les moins significatives, la $(M+1)^{\text{ième}}$ entrée étant à zéro.

Le circuit de conditionnement 40 comprend également sur une deuxième voie :

. une troisième porte logique ET 45 qui reçoit $J_1$ et $K_1$ et qui active un deuxième sélecteur 46 qui sélectionne soit une valeur nulle soit une valeur (y-b) où y et b sont des constantes du groupe choisi selon un mot de N bits,

. une quatrième porte logique ET 47 qui reçoit $J_1$ et $K_2$ qui est le deuxième bit le moins significatif du champ K du mot d'entrée. La porte ET 47 reçoit également un bit d qui est une constante du groupe choisi,

. la sortie de la porte ET 47 qui actionne un troisième sélecteur 48 qui sélectionne soit le bit $L_N$ qui est le bit le plus significatif du champ L soit son inverse obtenu par exemple par un inverseur 49,

. un quatrième additionneur 50 qui reçoit, sur une entrée, la sortie du deuxième sélecteur 46 et sur l'autre entrée les (N-1) bits les moins significatifs du champ L du mot d'entrée et comme $N^{\text{ième}}$ bit la sortie du troisième sélecteur 48. La sortie du quatrième additionneur 50 délivre la valeur du champ L modifié qui entre dans le deuxième additionneur 32. Les autres éléments de l'unité de gestion opèrent de la même manière que celle déjà décrite dans le cas de la figure 4A. L'unité de gestion délivre ainsi en sortie une adresse de destination formée du champ F pour les M bits les plus significatifs et du champ G pour les N bits les moins significatifs.

L'adresse de destination est ainsi formée des deux champs F et G. L'unité de gestion de la figure 4A ou 4B peut ainsi se substituer pour le calcul des adresses à l'unité arithmétique et logique habituellement utilisée pour cette fonction. Lorsque la loi de composition doit être appliquée plusieurs fois consécutivement, le résultat obtenu lors de la première application est réintroduit à l'entrée de l'unité de gestion et ainsi de suite.

Les valeurs à donner aux constantes C, y, P, b, d du second groupe non-commutatif sont définies préalablement par l'utilisateur selon le type d'application à traiter. L'exemple de la figure 6 indique comment cette détermination est effectuée. Il est présenté sous la forme d'un graphe quelconque, afin de décrire une application quelconque, mais il est néanmoins simplifié à quelques noeuds pour ne pas alourdir la démonstration.

Le graphe représenté par la figure 6 est décrit selon les indications des flèches à l'aide de deux générateurs appelés s et t. Les flèches en traits continus concernent le générateur t et les flèches en traits discontinus concernent le générateur s. En chaque noeud sont représentées les combinaisons de s et de t nécessaires pour atteindre les noeuds représentés par les points du graphe, l'élément e étant le noeud initial. Lorsque plusieurs trajets sont possibles, il en résulte que des relations propres au graphe apparaissent. Dans l'exemple 4 relations apparaissent :

$$
\begin{aligned}
s &= t^2 s t^2 \\
s^2 t^2 &= t^2 s^2 \\
s^3 &= s^2 t^2 s t^2 \\
ts &= s^3 t^5 .
\end{aligned}
\qquad (5)
$$

De plus on observe qu'il y a au plus 7 liens consécutifs concernant le générateur t et 3 liens consécutifs concernant le générateur s. La taille minimale de l'organe de stockage doit être telle que $2^N$ est supérieur à 7 et $2^M$ est supérieur à 3.

Cherchons une solution dans le cas du second groupe non-commutatif défini par les relations générales :

$$t2^N = e \;;\; s2^M = t2^P \;;$$
$$ts = s^{1+C*2^{M-1}}ty \;;$$
$$t^2s = st2^b \;;\; ts^2 = s^2t^{b^2+d*2^{N-1}}.$$

(6)

En appliquant aux relations 5 et 6 les calculs habituels propres à la théorie des groupes, le système de relations 5 peut se ramener dans le système intermédiaire :

$t^2s = st^{-2}$ ; $st^2 = t^{-2}s$ ; $ts = s^3t^5$

qui lui-même se réduit à :

$t^2s = st^{-2}$ ; $ts = s^3t^5$.

En comparant aux relations (6) on obtient :

$2b = -2$ soit $b = -1$

$ts = s^3t^5 = s^{1+C*2^{M-1}}ty$ soit y=5, C=1 et M=2.

A ce stade de calcul les contraintes déterminées sont : b=-1 ; C=1 ; M=2 ; y=5 ; $2^N$ supérieur à 7;

Pour déterminer les paramètres du second groupe non-commutatif il y a lieu de tenir compte des contraintes du tableau 1 suivant :

. $b^{2^M}-1$ doit être un multiple de $2^{N-1}$

. b-1 doit être un multiple de $2^{N-P}$

. C vaut 0 ou 1

. $b^{C*2^{M-1}}-1$ doit être un multiple de $2^{N-1}$

. d vaut 0 ou 1

. (y-b)*(b+1)-d*$2^{N-1}$ doit être un multiple de $2^P$

. (si $C*2^{M-2}$ est pair) tester $b^{C*2^{M-1}}-2*(b-y)-1$ qui doit être un multiple de $2^P$

. (si $C*2^{M-2}$ est impair) tester $b^{C*2^{M-1}}-2*(b-y)+d*2^{N-1}-1$ qui doit être un multiple de $2^P$

TABLEAU 1

Les paramètres du groupe non commutatif n'étant déterminables qu'à l'aide d'équations implicites, il est nécessaire d'effectuer cette détermination en vérifiant les équations à l'aide de valeurs possibles jusqu'à ce que toutes les contraintes déjà citées soient respectées. Ceci est réalisé à l'aide d'un programme d'ordinateur simple, aisément mis en oeuvre par un homme du métier, respectant les contraintes imposées. Il suffit de programmer pour chaque paramètre les valeurs suivantes :

. Lorsque N n'est pas connu faire N = 1, 2, 3, ...

. Lorsque M n'est pas connu faire M = 1, 2, 3, ...

. Lorsque P n'est pas connu faire P = 1, 2, 3, ..., N.

. Lorsque b n'est pas connu faire b = 1

puis b = $1+2^{N-P}$

puis b = $1+2*2^{N-P}$

jusqu'à b = $1+(2^P-1)*2^{N-P}$

. Lorsque d n'est pas connu faire d = 0 puis d=1 ;

. Lorsque C n'est pas connu faire C = 0

puis C = 1

. Lorsque y n'est pas connu faire y = 1, 3, 5, 7, ... $2^{N-1}$.

Dans l'exemple qui vient d'être décrit les valeurs déterminées à l'aide des équations sont b=-1, C=1, y=5, M=2, $2^N$ supérieur à 7.

On peut choisir N=3 ce qui donne un groupe de taille $2^{M+N}$=32.

On vérifie que :

. $b^{2^M}-1 = 0$ est un multiple de $2^{N-1}$=4

. $b^{C*2^{M-1}}-1 = 0$ est un multiple de $2^{N-1}$=4

Il reste les contraintes suivantes :

. d doit être égal à 0 ou 1

. (y-b)*(b+1)-d*$2^{N-1}$=-4d doit être un multiple de $2^P$. avec P compris entre 1 et N.

En choisissant par exemple P=2 et d=0 on obtient tous les paramètres du groupe non-commutatif qui correspond au graphe de la figure 6. Ces paramètres sont : N=3 ; M=2 ; P=2 ; b=-1 ; y=5 ; d=0 ; C=1.

Le procédé préalablement décrit à la figure 3B peut ainsi opérer à l'aide desdits paramètres. De même l'unité de gestion de la figure 4B peut opérer pour adresser les différents noeuds du graphe selon ce groupe non commutatif.

Afin de bien mettre en évidence tout l'intérêt de ce mode d'adressage, un exemple simple va être exposé avec un groupe métacyclique. Bien évidemment il ne s'agit que de bien faire comprendre l'invention mais celle-ci concerne également l'adressage de mots d'adresse dans des situations beaucoup plus élaborées.

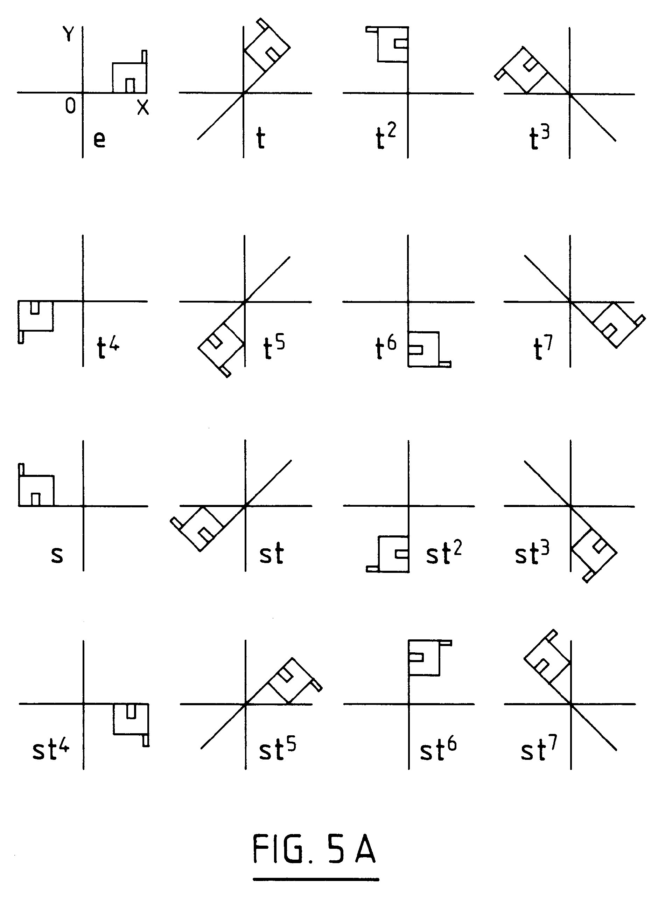

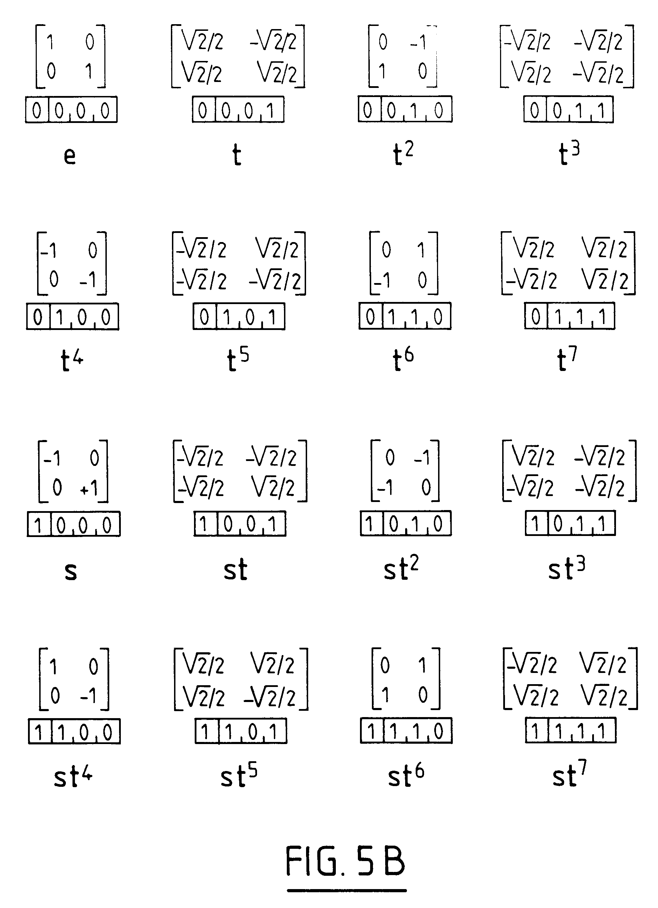

L'exemple est constitué par le problème de rotation-symétrie dans le plan. Il s'agit ici de symétrie par rapport à l'axe vertical OY et de rotation de 45°. Les parties hautes des figures 5A et 5B correspondent aux rotations avec les huit configurations possibles, l'élément d'origine étant appelé e. Les parties basses des figures 5A et 5B correspondent au cas où une symétrie est appliquée aux huit rotations précédentes, ce qui fournit huit configurations nouvelles. La figure 5B représente pour chaque cas indiqué la matrice associée à l'opération ainsi que les deux champs d'adresse s,t dans le groupe diédral à 16 éléments selon l'exemple soit N=3, M=1, P=3, b=-1.

Dans ce problème des rotations-symétries considérons le cas d'un point Q de l'objet représenté (une maison) de cote (2, 1) et appliquons lui successivement une rotation de 135° puis une symétrie puis une rotation de 45°.

Pour le calcul classique il faut opérer un produit de matrices tel que :

$$Q' : \begin{vmatrix} x \\ y \end{vmatrix} = \begin{vmatrix} \sqrt{2}/2 & - \sqrt{2}/2 \\ \sqrt{2}/2 & \sqrt{2}/2 \end{vmatrix} \begin{vmatrix} -1 & 0 \\ 0 & 1 \end{vmatrix} \begin{vmatrix} -\sqrt{2}/2 & - \sqrt{2}/2 \\ \sqrt{2}/2 & - \sqrt{2}/2 \end{vmatrix} \begin{vmatrix} 2 \\ 1 \end{vmatrix}$$

En effectuant la multiplication de ces trois matrices on obtient

$$Q' : \begin{vmatrix} 1 \\ 2 \end{vmatrix}.$$

Selon l'invention on opère non sur les valeurs des coordonnées mais sur les adresses qui sont séparées en deux champs s et t sur lesquels on effectue deux fois les opérations préalablement définies représentées par (I,J)\$(K,L)=(F,G) soit (I,J)\$(K,L)=[(I+K),(L+J*b^K+(dépassement de (I+K)*2^P))].

Pour les rotations-symétries b=-1 d'où :

F = I+K modulo $2^M$

G = L+J*(-1)^{K1}+[dépassement de (I+K)]*$2^P$.

Pour l'exemple choisi considérons les 3 opérations successives suivantes :
- rotation de 135° (s,t) = (0,3)
- symétrie (s,t) = (1,0)
- rotation de 45° (s,t) = (0,1)

La loi de composition du groupe appliquée deux fois à ces champs donne pour les 3 opérations successives :
(0,3)\$(1,0)\$(0,1) = (1,5)\$(0,1) = (1,6)

c'est-à-dire sur la figure 5A le cas st^6 pour lequel la matrice est

$$\begin{vmatrix} 0 & 1 \\ 1 & 0 \end{vmatrix}.$$

Il suffit alors d'effectuer un seul produit de la matrice par les cordonnées de Q : soit

$$Q' : \begin{vmatrix} 0 & 1 \\ 1 & 0 \end{vmatrix} \begin{vmatrix} 2 \\ 1 \end{vmatrix} = \begin{vmatrix} 1 \\ 2 \end{vmatrix}.$$

Selon l'invention on effectue ainsi des calculs simples sur les champs d'adresses, aisément mis en oeuvre dans l'unité de gestion et non plus des produits de matrices qui nécessitent un traitement beaucoup plus complexe et long. Lorsque la loi de composition doit être appliquée plusieurs fois consécutivement, le résultat obtenu lors de la première application est réintroduit à l'entrée de l'unité de gestion et ainsi de suite.

Dans le cas des symétries-rotations la constante b est égale à -1. Dans ce cas la détermination de l'expression J*b^K par l'unité de gestion revient à utiliser soit J soit -J selon que K1 est égal respectivement à 0 ou 1. Dans ce cas l'élément de calcul 31 de la figure 4A est modifié selon le schéma de la figure 7. Il est remplacé par un sélecteur 60 qui sélectionne le complément à 2 de J soit -J lorsque $K_1$ est à 1 et J lorsque $K_1$ est à zéro.

Selon l'invention la loi de composition ne nécessite que des calculs simples et permet de supprimer bon nombre d'appels en mémoire ce qui accroît la rapidité d'adressage lorsque les problèmes à traiter deviennent plus complexes. De plus la loi inverse permet d'effectuer les opérations dans le sens inverse.

L'unité de gestion de mot d'adresse qui vient d'être décrite peut être utilisée dans n'importe quelle structure de traitement de données ou n'importe quelle structure de mémorisation de données pour lesquelles il est nécessaire d'effectuer un adressage de ces données.

## Revendications

1. Procédé de gestion de mots d'adresses qui détermine dans une unité de gestion des adresses de destination à partir de mots d'adresse d'entrée de (M+N) bits pour l'aiguillage de données vers une structure adressable, ledit procédé, mis en oeuvre dans l'unité de gestion, comprenant les étapes suivantes :

- à partir de deux mots d'adresse d'entrée, séparation de chacun de ces mots en deux champs tel que :
   . les M bits de poids fort et les N bits de poids faible du premier mot d'entrée constituent respectivement les champs I et J,
   . les M bits de poids fort et les N bits de poids faible du second mot d'entrée constituent respectivement les champs K et L,

ledit procédé est caractérisé en ce qu'il combine les champs dans l'unité de gestion selon une loi de composition des groupes non-commutatifs métacycliques pour déterminer des adresses de destination formées de deux champs F et G constitués respectivement des M bits de poids fort et des N bits de poids faible issus de la combinaison tel que :

$F = I + K$ modulo $2^M$ et

$G = L + J*b^K + [$dépassement de $(I+K)]*2^P$ modulo $2^N$

où b et P sont des constantes prédéterminées du groupe choisi tel que $b^{2^M}-1$ est un multiple de $2^N$ et b-1 est un multiple de $2^{N-P}$, et P est un entier positif inférieur à N et où les symboles (+) et (*) représentant respectivement les opérations d'addition et de multiplication.

2. Procédé de gestion de mots d'adresses qui détermine dans une unité de gestion des adresses de destination à partir de mots d'adresse d'entrée de (M+N) bits pour l'aiguillage de données vers une structure adressable, ledit procédé, mis en oeuvre dans l'unité de gestion, comprenant les étapes suivantes :

- à partir de deux mots d'adresse d'entrée, séparation de chacun de ces mots en deux champs tel que :
   . les M bits de poids fort et les N bits de poids faible du premier mot d'entrée constituent respectivement les champs I et J,
   . les M bits de poids fort et les N bits de poids faible du second mot d'entrée constituent respectivement les champs K et L,

ledit procédé est caractérisé en ce qu'il combine les champs dans l'unité de gestion selon une loi de composition des groupes non-commutatifs métacycliques pour déterminer des adresses de destination formées de deux champs F et G constitués respectivement des M bits de poids fort et des N bits de poids faible issus de la combinaison, les champs I, J, K, L étant formés respectivement des bits $(I_M...I_1)$, $(J_N...J_1)$, $(K_M...K_1)$, $(L_N...L_1)$, où l'indice d'ordre 1 se rapporte au bit de poids le plus faible de chaque champ, ledit procédé combine ces champs dans l'unité de gestion selon une loi de composition de groupes non-commutatifs et détermine F et G tel que :

$F = I+K+J_1.K_1.C*2^{M-1}$ modulo $2^M$

et

$G = L+J*b^K+J_1.K_1*(y-b)+J_1.K_2.d*2^{N-1}$

$+ [$dépassement de $(I+K+J_1.K_1.C*2^{M-1})]*2^P$ modulo $2^N$

où les symboles (+), (*) et (.) représentent respectivement l'addition, la multiplication et la fonction ET logique et où C, y, P, b, d sont des constantes prédéterminées du groupe choisi selon :
   . $b^{2^M}-1$ doit être un multiple de $2^{N-1}$
   . b-1 doit être un multiple de $2^{N-P}$
   . C vaut 0 ou 1
   . $b^{C*2^{M-1}}-1$ doit être un multiple de $2^{N-1}$
   . d vaut 0 ou 1
   . $(y-b)*(b+1)-d*2^{N-1}$ doit être un multiple de $2^P$

. (si $C*2^{M-2}$ est pair) tester $b^{C*2^{M-1}}-2*(b-y)-1$ qui doit être un multiple de $2^P$

. (si $C*2^{M-2}$ est impair) tester $b^{C*2^{M-1}}-2*(b-y)+d*2^{N-1}-1$ qui doit être un multiple de $2^P$.

3. Unité de gestion de mots d'adresse d'entrée de (M+N) bits qui détermine des adresses de destination pour l'aiguillage de données, l'unité déterminant les adresses de destination à partir de deux mots d'adresse d'entrée en les séparant l'un et l'autre, de la même manière, selon deux champs,

. les M bits de poids fort et les N bits de poids faible du premier mot d'entrée constituant respectivement les champs I et J,

. les M bits de poids fort et des N bits de poids faible du second mot d'entrée constituant respectivement les champs K et L,

caractérisé en ce que l'unité de gestion combine les champs selon une loi de composition des groupes non-commutatifs métacycliques pour déterminer des adresses de destination formées de deux champs F et G constitués respectivement des M bits de poids fort et des N bits de poids faible issus de la combinaison, l'unité de gestion comprenant :

- un premier additionneur (30) qui délivre le champ F tel que $F = I+K$ modulo $2^M$,
- un décaleur (35) qui décale de P poids binaires le bit de dépassement délivré par le premier additionneur (30) et qui délivre sur N bits un mot de dépassement décalé R,
- un second additionneur (32) qui additionne L et le mot de dépassement décalé R,
- un élément de calcul (31) qui détermine l'expression $J*b^k$,
- un troisième additionneur (34) qui additionne le résultat délivré par l'élément de calcul (31) avec le résultat délivré par le deuxième additionneur (32) et qui délivre le champ G tel que
  $G = L+J*b^k+R$ modulo $2^N$
  où b et P sont des constantes prédéterminées du groupe choisi tel que $b^{2^M}-1$ est un multiple de $2^N$ et b-1 est un multiple de $2^{N-P}$, et P est un entier positif inférieur à N.

4. Unité de gestion selon la revendication 3, caractérisée en ce qu'elle est modifiée de sorte que le premier additionneur (30) opère sur (M+1) bits et délivre 2 bits de dépassement qui sont introduits et décalés dans le décaleur (35) et en ce qu'elle comprend en outre un circuit de conditionnement (40) des mots d'adresse d'entrée, les champs I, J, K, L étant formés respectivement des bits $(I_M...I_1)$, $(J_N...J_1)$, $(K_M...K_1)$, $(L_N...L_1)$, où l'indice d'ordre 1 se rapporte au bit de poids le plus faible de chaque champ, le circuit de conditionnement (40) comprenant :

- sur une première voie :
  . une première porte ET (41) qui reçoit $J_1$, $K_1$ et un bit C
  . une seconde porte ET (44) qui reçoit $I_M$ et la sortie de la première porte ET (41),
  . un premier sélecteur (42), actionné par la sortie de la première porte ET (41), qui sélectionne $I_M$ ou sa valeur logique inversée de sorte que le premier additionneur (30) reçoit sur une entrée :
    - les M-1 bits de poids faible du champ I du mot d'adresse d'entrée,
    - la sortie du premier sélecteur (42) comme $M^{ième}$ bit,
    - la sortie de la seconde porte ET (44) comme $(M+1)^{ième}$ bit,
  . et sur l'autre entrée, le champ K positionné sur les M bits les moins significatifs de cette entrée, le $(M+1)^{ième}$ bit étant à zéro,

5. sur une seconde voie :
  . une troisième porte logique ET (45) qui reçoit $J_1$ et $K_1$ et qui agit sur un deuxième sélecteur (46) qui sélectionne une valeur y-b ou une valeur nulle,
  . une quatrième porte logique ET (47), qui reçoit $J_1$, $K_2$ et un bit d, et qui agit sur un troisième sélecteur (48) qui sélectionne $L_N$ ou sa valeur logique inversée,
  . un quatrième additionneur (50) qui reçoit sur une entrée la sortie du deuxième sélecteur (46) et sur l'autre entrée les (N-1) bits de poids faible du champ L du mot d'adresse d'entrée ainsi que la sortie du troisième sélecteur (48) comme $N^{ième}$ bit, la sortie du quatrième additionneur (50) entrant dans le second additionneur (32), où C, y, P, b, d sont des constantes prédéterminées du groupe choisi selon :
  . $b^{2^M}-1$ doit être un multiple de $2^{N-1}$
  . b-1 doit être un multiple de $2^{N-P}$
  . C vaut 0 ou 1
  . $b^{C*2^{M-1}}-1$ doit être un multiple de $2^{N-1}$
  . d vaut 0 ou 1
  . $(y-b)*(b+1)-d*2^{N-1}$ doit être un multiple de $2^P$

. (si $C*2^{M-2}$ est pair) tester $b^{C*2^{M-1}}-2*(b-y)-1$ qui doit être un multiple de $2^P$

. (si $C*2^{M-2}$ est impair) tester $b^{C*2^{M-1}}-2*(b-y)+d*2^{N-1}-1$ qui doit être un multiple de $2^P$.

6. Unité selon une des revendications 3 ou 4,
caractérisée en ce que l'élément de calcul (31) est une table qui stocke des valeurs prédéterminées.

7. Unité selon la revendication 3 modifiée en ce que, dans le cas où b=-1 modulo $2^N$, l'élément de calcul (31) est remplacé par un sélecteur (60) qui sélectionne le complément à 2 de J lorsque $K_1$ est à 1 et J lorsque $K_1$ est à zéro.

8. Structure de traitement de données caractérisée en ce qu'elle comprend une unité de gestion d'adresses selon une des revendications 3 à 6.

9. Structure de mémorisation de données caractérisée en ce qu'elle comprend une unité de gestion d'adresses selon une des revendications 3 à 6.

**Patentansprüche**

1. Verfahren zur Verwaltung von Adreßwörtern, das in einer Verwaltungseinheit Bestimmungsadressen auf der Basis von Eingangsadreßwörtern mit (M+N) Bits zur Datenverteilung an eine adressierbare Struktur festlegt, wobei das genannte Verfahren, ausgeführt in einer Verwaltungseinheit, die folgenden Schritte umfaßt:
- ausgehend von den zwei Eingangsadreßwörtern eine Aufteilung jedes dieser Wörter in zwei Felder, so daß:
. die M höherwertigen Bits und die N niedrigerwertigen Bits des ersten Eingangsadreßwortes jeweils die Felder I und J bilden,
. die M höherwertigen und die N niedrigerwertigen Bits des zweiten Eingangsadreßwortes jeweils die Felder K und L bilden,
<u>dadurch gekennzeichnet</u>, daß das Verfahren die Felder in der Verwaltungseinheit entsprechend einem Bildungsgesetz für nicht-kommutative metazyklische Gruppen kombiniert, um die Bestimmungsadressen zu bestimmen, die aus zwei Feldern F und G gebildet sind, die aus den aus der Kombination hervorgehenden M höherwertigen Bits und N niedrigerwertigen Bits bestehen, so daß:
$F = I + K$ modulo $2^M$ und
$G = L+J*b^K + [$Überlauf von $(I+K)*2^P$ modulo $2^N$,
wobei b und P zuvor festgelegte Konstanten der gewählten Gruppe sind, so daß $b^{2^M}-1$ ein Vielfaches von $2^N$ und $b-1$ ein Vielfaches von $2^{N-P}$ und P eine ganze positive Zahl kleiner als N ist, wobei die Symbole (+) und (*) eine Additions- bzw. Multiplikationsoperation andeuten.

2. Verfahren zur Verwaltung von Adreßwörtern, das in einer Verwaltungseinheit Bestimmungsadressen auf der Basis von Eingangsadreßwörtern mit (M+N) Bits zur Datenverteilung an eine adressierbare Struktur festlegt, wobei das genannte Verfahren, ausgeführt in einer Verwaltungseinheit, die folgenden Schritte umfaßt:
- ausgehend von den zwei Eingangsadreßwörtern eine Aufteilung jedes dieser Wörter in zwei Felder, so daß:
. die M höherwertigen Bits und die N niedrigerwertigen Bits des ersten Eingangsadreßwortes jeweils die Felder I und J bilden,
. die M höherwertigen und die N niedrigerwertigen Bits des zweiten Eingangsadreßwortes jeweils die Felder K und L bilden,
<u>dadurch gekennzeichnet</u>, daß das Verfahren die Felder in der Verwaltungseinheit entsprechend einem Bildungsgesetz für nicht-kommutative metazyklische Gruppen kombiniert, um die Bestimmungsadressen zu bestimmen, die aus zwei Feldern F und G gebildet sind, die aus den aus der Kombination hervorgehenden M höherwertigen Bits und N niedrigerwertigen Bits bestehen, wobei die Felder I, J, K, L jeweils aus den Bits $(I_M...I_1)$, $(J_N.. J_1)$, $(K_M...K_1)$, $(L_N...L_1)$ gebildet sind, wobei der Rangindex 1 sich auf das niedrigstwertige Bit jedes Feldes bezieht und wobei das genannte Verfahren diese Felder in der Verwaltungseinheit entsprechend einem Bildungsgesetz für nicht-kommutative Gruppen kombiniert und F und G bestimmt, so daß:
$F = I+K+J_1.K_1.C*2^{M-1}$ modulo $2^M$

und

$G = L+J*b^K+J_1.K_1*(y-b)+J_1.K_2.d*2^{N-1} +$ [Überlauf von $(I+K+J_1.K_1.C*2^{M-1})]*2^P$ modulo $2^N$,

wobei die Symbole (+), (∗), (.) jeweils die Addition, die Multiplikation und die Funktion Logisches UND andeuten und C, y, P, b und d zuvor festgelegte Konstanten der gewählten Gruppe sind, wobei gilt:

. $b^{2^M}-1$ muß ein Vielfaches von $2^{N-1}$ sein

. $b-1$ muß ein Vielfaches von $2^{N-P}$ sein

. C ist gleich 0 oder 1

. $b^{C*2^{M-1}}-1$ muß ein Vielfaches von $2^{N-1}$ sein

. d ist gleich 0 oder 1

. $(y-b)*(b+1)-d*2^{N-1}$ muß ein Vielfaches von $2^P$ sein

. (falls $C*2^{M-2}$) Überprüfung von von $b^{C*2^{M-1}}-2*(b-y)-1$, dessen Wert ein Vielfaches von $2^P$ sein muß

. (falls $C*2^{M-2}$ ungerade ist) Überprüfung von $b^{C*2^{M-1}}-2*(b-y)+d*2^{N-1}-1$, dessen Wert ein Vielfaches von $2^P$ sein muß.

3. Verwaltungseinheit für Eingangsadreßwörter mit (M+N) Bits, die Bestimmungsadressen zur Datenverteilung bestimmt, wobei die Einheit die Bestimmungsadressen auf der Basis von zwei Eingangsadreßwörtern bestimmt, indem sie sowohl das eine als auch das andere Eingangsadreßwort in gleicher Weise in zwei Felder aufteilt, wobei:

. die M höherwertigen Bits und die N niedrigerwertigen Bits des ersten Eingangsadreßwortes jeweils die Felder I und J bilden,

. die M höherwertigen und die N niedrigerwertigen Bits des zweiten Eingangsadreßwortes jeweils die Felder K und L bilden,

dadurch gekennzeichnet, daß die Verwaltungseinheit die Felder entsprechend einem Bildungsgesetz für nicht-kommutative metazyklische Gruppen kombiniert, um die Bestimmungsadressen zu bestimmen, die aus zwei Feldern F und G gebildet sind, die aus den aus der Kombination hervorgehenden M höherwertigen Bits und N niedrigerwertigen Bits bestehen, wobei die Verwaltungseinheit folgendes umfaßt:

- einen ersten Addierer (30), der ein Feld F liefert, so daß $F=I+K$ modulo $2^M$,

- einen Verschieber (35), der das vom ersten Addierer (30) gelieferte Überlaufbit in der Wertigkeit um P verschiebt, und der auf N Bits ein verschobenes Überlaufwort R liefert,

- einen zweiten Addierer (32), der L und das verschobene Überlaufwort R addiert,

- ein Rechenelement (31), das den Ausdruck $J*b^K$ bestimmt,

- einen dritten Addierer (34), der das vom Rechenelement (31) gelieferte Ergebnis zu dem vom zweiten Addierer (32) gelieferte Ergebnis addiert und das Feld G liefert, so daß $G = L+J*b^K+R$ modulo $2^N$,

wobei b und p zuvor festgelegte Konstanten der gewählten Gruppe sind, so daß $b^{2^M}-1$ ein Vielfaches von $2^N$ ist und $b-1$ ein Vielfaches von $2^{N-P}$ ist und P eine ganze positive Zahl kleiner als N ist.

4. Verwaltungseinheit nach Anspruch 3, dadurch gekennzeichnet, daß sie so abgewandelt wird, daß der erste Addierer (30) (M+1) Bits bearbeitet und 2 Überlaufbits liefert, die dem Verschieber (25) zugeführt und in diesem verschoben werden, und daß sie außerdem eine Bedingungsprüfungsschaltung (40) für die Eingangsadreßwörter umfaßt, wobei die Felder I, J, K und L jeweils aus den Bits $(I_M...I_1)$, $(J_N...J_1)$, $(K_M...K_1)$ und $(L_N...L_1)$ gebildet werden, wobei der Rangindex 1 sich auf das niedrigstwertige Bit jedes Feldes bezieht und die Bedingungsprüfungsschaltung folgendes umfaßt:

- in einem ersten Pfad:

. ein erstes UND-Gatter (41), das $J_1$, $K_1$ und ein Bit C empfängt,

. ein zweites UND-Gatter (44), das $I_M$ und das Ausgangssignal des ersten UND-Gatters (41) empfängt,

. einen ersten durch das Ausgangssignal des ersten UND-Gatters (41) aktivierten Selektierer (42), der $I_M$ oder dessen umgekehrten Logikwert selektiert, so daß der erste Addierer (30) an einem Eingang folgendes empfängt:

- die M-1 niedrigerwertigen Bits des Feldes I des Eingangsadreßwortes,

- das Ausgangssignal des ersten Selektierers (42) als M-tes Bit,

- das Ausgangssignal des zweiten UND-Gatters (44) als (M+1)-tes Bit,

. und an dem anderen Eingang das Feld K, das auf den M niedrigstwertigen Bits dieses Eingangs positioniert ist, wobei das (M+1)-te Bit Null aufweist,

- in einem zweiten Pfad:

. ein drittes Logisch-UND-Gatter (45), das $J_1$ und $K_1$ empfängt und auf einen zweiten Selektierer (46) wirkt, der einen Wert y-b oder einen Wert Null selektiert,

. ein viertes Logisch-UND-Gatter (47), das $J_1$, $K_2$ und ein Bit d empfängt und auf einen dritten Selektierer (48) wirkt, der $L_N$ oder dessen umgekehrten Logikwert selektiert,

. einen vierten Addierer (50), der an einem Eingang das Ausgangssignal des zweiten Selektierers (46) empfängt und an dem anderen Eingang die (N-1) niedrigerwertigen Bits des Feldes L des Eingangsadreßwortes sowie das Ausgangssignal des dritten Selektierers (48) als N-tes Bit, wobei das Ausgangssignal des vierten Addierers (50) dem zweiten Addierer (32) zugeführt wird und wobei C, y, P, b und d zuvor festgelegte Konstanten der gewählten Gruppe sind, wobei gilt:

. $b^{2^M}-1$ muß ein Vielfaches von $2^{N-1}$ sein

. b-1 muß ein Vielfaches von $2^{N-1}$ sein

. C ist gleich 0 oder 1

. $b^{C*2^{M-1}}-1$ muß ein Vielfaches von $2^{N-1}$ sein

. d ist gleich 0 oder 1

. $(y-b)*(b+1)d*2^{N-1}$ muß ein Vielfaches von $2^P$ sein

. (falls $C*2^{M-2}$ ungerade ist) Überprüfung von $b^{C*2^{M-1}}-2*(b-y)-1$ dessen Wert ein Vielfaches von $2^P$ sein muß

. (falls $C*2^{M-2}$ ungerade ist) Überprüfung von $b^{C*2^{M-1}}-2*(b-y)+d*2^{N-1}-1$, dessen Wert ein Vielfaches von $2^P$ sein muß.

5. Einheit nach einem der Ansprüche 3 oder 4, <u>dadurch gekennzeichnet</u>, daß das Rechenelement (31) eine Tabelle ist, in der zuvor festgelegte Werte gespeichert werden.

6. Einheit nach Anspruch 3, so abgewandelt, daß in dem Fall, wo b=-1 modulo $2^N$, das Rechenelement durch einen Selektierer (60) ersetzt wird, der das Komplement zu 2 von J selektiert, wenn $K_1$ 1 aufweist und J, wenn $K_1$ Null aufweist.

7. Datenverarbeitungsstruktur, <u>dadurch gekennzeichnet</u>, daß sie eine Adressenverwaltungseinheit nach einem der Ansprüche 3 bis 6 umfaßt.

8. Datenspeicherstruktur, <u>dadurch gekennzeichnet</u>, daß sie eine Adressenverwaltungseinheit nach einem der Ansprüche 3 bis 6 umfaßt.

**Claims**

1. A method for the management of address words which determines, in a management unit, destination addresses on the basis of (M+N)-bit input address words in order to switch data to an addressable structure, which method carried out in the management unit, comprises the following steps:
- on the basis of two input address words, separation of each of these words into two fields such that:
    . the M most-significant bits and the N least-significant bits of the first input word constitute the fields I and J, respectively,
    . the M most-significant bits and the N least-significant bits of the second input word constitute the fields K and L, respectively,
which method is characterized in that it combines the fields in the management unit in accordance with a rule for the composition of metacyclic non-commutative groups in order to determine destination addresses which are formed by two fields F and G, consisting of the M most-significant bits and the N least-significant bits from the combination so that:
F = I+K modulo $2^M$, and
G = $L+J*b_K$ + [overflow of (I+K)]$*2^P$ modulo $2^N$
where b and P are predetermined constants of the selected group such that $b^{2^M}-1$ is a multiple of $2^N$ and b-1 is a multiple of $2^{N-P}$, and P is a positive integer smaller than N, and where the symbols (+) and (∗) represent the operations of addition and of multiplication, respectively.

2. A method for the management of address words which determines, in a management unit, destination addresses on the basis of (M+N)-bit input address words in order to switch data to an addressable structure, which method, carried out in the management unit, comprises the following steps:
- on the basis of two input address words, separation of each of these words into two fields such that:
    . the M most-significant bits and the N least-significant bits of the first input word constitute the fields I and J, respectively,

. the M most-significant bits and the N least-significant bits of the second input word constitute the fields K and L, respectively,

which method is characterized in that it combines the fields in the management unit in accordance with a rule for the composition of metacyclic non-commutative groups in order to determine destination addresses which are formed by two fields F and G consisting of the M most-significant bits and the N least-significant bits from the combination, the fields I, J, K, L being formed of the bits $(I_M...I_1)$, $(J_N...J_1)$, $(K_M...K_1)$, $(L_N...L_1)$, respectively, where the index of order 1 relates to the least-significant bit of each field, which method combines these fields in a management unit in accordance with a rule for the composition of non-commutative groups and determines F and G so that:

$F = I+K+J_1.K_1.C*2^{M-1}$ modulo $2^M$

and

$G = L+J*b^K+J_1.K_1*(y-b)+J_1.K_2.d*2^{N-1}$
$+ [\text{overflow of } (I+K+J_1.K_1C*2^{M-1})]*2^P$ modulo $2^N$

where the symbols (+), (*) and (.) represent the addition, the multiplication and the logic AND-function, respectively, and where C, y, P, b, d are predetermined constants of the group selected in accordance with:

- $b^{2M}-1$ must be a multiple of $2^{N-1}$
- $b-1$ must be a multiple of $2^{N-P}$
- C equals 0 or 1
- $b^{c*2^{M-1}}-1$ must be a multiple of $2^{N-1}$
- d equals 0 or 1
- $(y-b)*(b+1)-d*2^{N-1}$ must be a multiple of $2^P$
- (if $c*2^{M-2}$ is even) testing of $b^{c*2^{M-1}}-2*(b-y)-1$ which must be a multiple of $2^P$
- (if $c*2^{M-2}$ is odd) testing of $b^{c*2^{M-1}}-2*(b-y)+d*2^{N-1}$

which must be a multiple of $2^P$.

3. A unit for the management of input address words of (M+N) bits which determines destination addresses for the switching of data, which unit determines the destination addresses on the basis of two input address words by separating both of them, in the same manner, into two fields,

. the M most-significant bits and the N least-significant bits of the first input word constituting the fields I and J, respectively,

. the M most-significant bits and the N least-significant bits of the second input word constituting the fields K and L, respectively,

characterized in that the management unit combines the fields in accordance with a rule for the composition of metacyclic non-commutative groups in order to determine destination addresses formed by two fields F and G consisting of the M most-significant bits and the N least-significant bits, respectively, resulting from the combination, the management unit comprising:

- a first adder (30) which delivers the field F such that $F = I+K$ modulo $2^M$,
- a shifter (35) which shifts by P binary weights the overflow bit delivered by the first adder (30) and which delivers, on N bits, a shifted overflow word R,
- a second adder (32) which adds L and the shifted overflow word R,
- a computing element (31) which determines the expression $J*b^K$,
- a third adder (34) which adds the result delivered by the computing element (31) to the result delivered by the second adder (32) and which delivers the field G such that $G = L+J*b^K+R$ modulo $2^N$

where b and P are predetermined constants of the selected group such that $b^{2M}-1$ is a multiple of $2^N$ and $b-1$ is a multiple of $2^{N-P}$, and P is a positive integer smaller than N.

4. A management unit as claimed in Claim 3, characterized in that it is modified in such a manner that the first adder (30) operates on (M+1) bits and delivers 2 overflow bits which are input and shifted in the shifter (35) and in that it also comprises a circuit (40) for conditioning the input address words, the fields I, J, K, L being formed of the bits $(I_M...I_1)$, $(J_N...J_1)$, $(K_M...K_1)$, $(L_N...L_1)$, respectively, where the index of order 1 relates to the least-significant bit of each field, the conditioning circuit (40) comprising:

- in a first channel:
. a first AND-gate (41) which receives $J_1$, $K_1$ and a bit C
. a second AND-gate (44) which receives $I_M$ and the output of the first AND gate (41),
. a first selector (42), actuated by the output of the first AND gate (41), which selects $I_M$ or its inverse logic value in such a manner that the first adder (30) receives on one input:
- the M-1 least-significant bits of the field I of the input address word,

- the output of the first selector (42) as the M-th bit,
- the output of the second AND-gate (44) as the (M+1)-th bit, and on the other input the field K positioned on the M least-significant bits of this input, the (M+1)-th bit being zero,

- in a second channel:

. a third logic AND-gate (45) which receives $J_1$ and $K_1$ and which acts on a second selector (46) which selects a value y-b or a value zero,

. a fourth logic AND-gate (47) which receives $J_1$, $K_2$ and a bit d, and which acts on a third selector (48) which selects $L_N$ or its inverse logic value,

. a fourth adder (50) which receives on one input the output of the second selector (46) and on the other input the (N-1) least-significant bits of the field L of the input address word as well as the output of the third selector (48) as the N-th bit, the output of the fourth adder (50) entering the second adder (32), where C, y, P, b, d are predetermined constants of the group selected in accordance with:

. $b2^M-1$ must be a multiple of $2^{N-1}$

. b-1 must be a multiple of $2^{N-P}$

. C is 0 or 1

. $b^{c*2^{M-1}}-1$ must be a multiple of $2^{N-1}$

. d is 0 or 1

. $(y-b)*(b + 1)-d*2^{N-1}$ must be a multiple of $2^P$

. (if $c*2^{M-2}$ is even) testing of $b^{c*2^{M-1}}-2*(b-y)-1$ which must be a multiple of $2^P$

. (if $c*2^{M-2}$ is odd) testing of $b^{c*2^{M-1}}-2*(by)+d*2^{N-1}$ which must be a multiple of $2^P$.

5. A unit as claimed in one of the Claims 3 or 4, characterized in that the computation element (31) is a table which stores predetermined values.

6. A unit as claimed in Claim 3, modified in that, in the case where b=-1 modulo $2^N$, the computation element (31) is replaced by a selector (60) which selects the 2's complement of J when $K_1$ is I and J when $K_1$ is zero.

7. A data processing structure, characterized in that it comprises an address management unit as claimed in one of the Claims 3 to 6.

8. A data storage structure, characterized in that it comprises an address management unit as claimed in one of the Claims 3 to 6.

FIG. 1

FIG. 2

$$\underline{\text{FIG. 3A}}$$

$$\underline{\text{FIG. 6}}$$

$$J_1 \cdot K_1 \cdot C \quad 210$$

$= 0$    $= 1$

$I = I \quad 218 \quad I = I + 2^{M-1} \quad 213$

$J_1 \cdot K_1 \quad 211$

$= 0$    $= 1$

$H = 0 \quad 214 \quad H = y - b \quad 215$

$J_1 \cdot K_2 \cdot d \quad 212$

$= 0$    $= 1$

$L = L \quad 219 \quad L = L + 2^{N-1} \quad 216$

$L = L + H \quad 217$

$F = I + K \Longleftarrow K \quad 101$

$J * b^K \quad 104 \qquad J, K$

$DE_2$

$L = L + DE_2 * 2^P \quad 103$

$F \quad 102$

$G = L + J * b^K \quad 105$

FIG. 3 B

FIG. 4 A

FIG. 7

# FIG. 4B

FIG. 5 A

$$\begin{bmatrix} 1 & 0 \\ 0 & 1 \end{bmatrix}$$

| 0 | 0 | 0 | 0 |

$$e$$

$$\begin{bmatrix} \sqrt{2}/2 & -\sqrt{2}/2 \\ \sqrt{2}/2 & \sqrt{2}/2 \end{bmatrix}$$

| 0 | 0 | 0 | 1 |

$$t$$

$$\begin{bmatrix} 0 & -1 \\ 1 & 0 \end{bmatrix}$$

| 0 | 0 | 1 | 0 |

$$t^2$$

$$\begin{bmatrix} -\sqrt{2}/2 & -\sqrt{2}/2 \\ \sqrt{2}/2 & -\sqrt{2}/2 \end{bmatrix}$$

| 0 | 0 | 1 | 1 |

$$t^3$$

$$\begin{bmatrix} -1 & 0 \\ 0 & -1 \end{bmatrix}$$

| 0 | 1 | 0 | 0 |

$$t^4$$

$$\begin{bmatrix} -\sqrt{2}/2 & \sqrt{2}/2 \\ -\sqrt{2}/2 & -\sqrt{2}/2 \end{bmatrix}$$

| 0 | 1 | 0 | 1 |

$$t^5$$

$$\begin{bmatrix} 0 & 1 \\ -1 & 0 \end{bmatrix}$$

| 0 | 1 | 1 | 0 |

$$t^6$$

$$\begin{bmatrix} \sqrt{2}/2 & \sqrt{2}/2 \\ -\sqrt{2}/2 & \sqrt{2}/2 \end{bmatrix}$$

| 0 | 1 | 1 | 1 |

$$t^7$$

$$\begin{bmatrix} -1 & 0 \\ 0 & +1 \end{bmatrix}$$

| 1 | 0 | 0 | 0 |

$$s$$

$$\begin{bmatrix} -\sqrt{2}/2 & -\sqrt{2}/2 \\ -\sqrt{2}/2 & \sqrt{2}/2 \end{bmatrix}$$

| 1 | 0 | 0 | 1 |

$$st$$

$$\begin{bmatrix} 0 & -1 \\ -1 & 0 \end{bmatrix}$$

| 1 | 0 | 1 | 0 |

$$st^2$$

$$\begin{bmatrix} \sqrt{2}/2 & -\sqrt{2}/2 \\ -\sqrt{2}/2 & -\sqrt{2}/2 \end{bmatrix}$$

| 1 | 0 | 1 | 1 |

$$st^3$$

$$\begin{bmatrix} 1 & 0 \\ 0 & -1 \end{bmatrix}$$

| 1 | 1 | 0 | 0 |

$$st^4$$

$$\begin{bmatrix} \sqrt{2}/2 & \sqrt{2}/2 \\ \sqrt{2}/2 & -\sqrt{2}/2 \end{bmatrix}$$

| 1 | 1 | 0 | 1 |

$$st^5$$

$$\begin{bmatrix} 0 & 1 \\ 1 & 0 \end{bmatrix}$$

| 1 | 1 | 1 | 0 |

$$st^6$$

$$\begin{bmatrix} -\sqrt{2}/2 & \sqrt{2}/2 \\ \sqrt{2}/2 & \sqrt{2}/2 \end{bmatrix}$$

| 1 | 1 | 1 | 1 |

$$st^7$$

## FIG. 5 B